Europäisches Patentamt

European Patent Office

Office européen des brevets

(19)

(11) Numéro de publication : **0 028 190**
**B1**

(12) # FASCICULE DE BREVET EUROPÉEN

(45) Date de publication du fascicule du brevet :
05.10.83

(51) Int. Cl.³ : **A 47 J 36/38**

(21) Numéro de dépôt : **80401497.5**

(22) Date de dépôt : **22.10.80**

(54) Ustensile culinaire comportant des moyens pour collecter les condensats de vapeur.

(30) Priorité : 25.10.79 LU 81821

(43) Date de publication de la demande :
06.05.81 Bulletin 81/18

(45) Mention de la délivrance du brevet :
05.10.83 Bulletin 83/40

(84) Etats contractants désignés :
AT BE CH DE FR GB IT LI NL SE

(56) Documents cités :
US A 2 790 436
US A 3 183 905
US A 3 232 214

(73) Titulaire : SEB S.A. Société Anonyme française
F-21260 Selongey (FR)

(72) Inventeur : Pauty, Bernard
32 rue de Dijon
Daix, F-21121 Fontaine Les Dijon (FR)

(74) Mandataire : Bouju, André
38 Avenue de la Grande Armée
F-75017 Paris (FR)

Ustensile culinaire comportant des moyens pour collecter les condensats de vapeur

La présente invention concerne un ustensile culinaire et en particulier une friteuse, comportant des moyens pour collecter les condensats de vapeur formés sur le fond de son couvercle lors de la cuisson.

On connaît une friteuse (FR-A-2 239 224) comprenant sous son couvercle un voile métallique qui collecte les condensats de vapeur formés lors de la cuisson et qui les canalise vers un récipient fixé de façon amovible à l'extérieur de la friteuse, sous l'articulation du couvercle. En ouvrant ce couvercle, ces condensats s'écoulent dans ce récipient extérieur.

On évite ainsi que ces condensats s'écoulent brutalement dans le bain d'huile chaude de la friteuse, ce qui provoquerait des crépitements et des projections d'huile qui peuvent être dangereuses.

Le récipient extérieur de collecte des condensats doit naturellement être vidé périodiquement pour éviter tout débordement.

On connaît d'autre part des récipients de cuisson dont le couvercle comporte une gorge annulaire de section sensiblement en U et ouverte vers l'intérieur de ce couvercle.

Lors de la cuisson, la vapeur se condense sur la face interne du couvercle qui est refroidie par l'atmosphère extérieure.

Lorsqu'on ouvre ce couvercle, en prenant soin de l'incliner suffisamment, les condensats s'écoulent vers le point le plus bas du couvercle et sont collectés dans la gorge périphérique précitée. On évite ainsi que ces condensats tombent sur la table ou le plan de travail sur lequel est disposé le récipient de cuisson.

Toutefois, dès que l'on replace ce couvercle sur l'ustensile, les condensats se déversent dans le récipient de cuisson, ce qui peut engendrer les inconvénients signalés plus haut, notamment dans le cas où un tel récipient contient de l'huile chaude.

Par ailleurs, on a décrit dans le brevet US-A-2 790 436 un couvercle de poêle à frire dont la face interne comporte des rigoles et un conduit inclinés vers une cavité dans laquelle est disposée une éponge. Lors de la cuisson, les vapeurs de graisse et d'eau qui se condensent sur la face interne du couvercle sont acheminées en continu vers la cavité où elles sont absorbées par l'éponge.

Toutefois, ce couvercle présente l'inconvénient suivant : lorsque l'utilisateur ouvre ce couvercle, en l'inclinant dans un mauvais sens, la graisse et l'eau qui ne sont pas encore absorbées risquent de se déverser dans la poêle en engendrant les inconvénients signalés plus haut. De plus, ce couvercle est de construction fort complexe et donc très onéreuse.

Le but de la présente invention est de remédier aux inconvénients des ustensiles culinaires précités, en créant des moyens de collecte des condensats de vapeur de cuisson qui assurent l'élimination de ces condensats, sans aucune intervention manuelle de l'utilisateur, en évitant ainsi tout risque d'écoulement intempestif et brutal de ces condensats à l'intérieur du récipient culinaire.

L'ustensile culinaire visé par l'invention comprend un récipient et un couvercle destiné à occuper une position inclinée lors de son ouverture, ce couvercle comportant sur sa périphérie une gorge annulaire ouverte vers l'intérieur de ce couvercle et capable de collecter lors de l'ouverture de ce couvercle, les condensats de vapeur formés à l'intérieur de l'ustensile.

Suivant l'invention, cet ustensile est caractérisé en ce qu'il comporte en son intérieur, au moins dans une zone adjacente au point le plus bas du couvercle, lorsque ce dernier est ouvert, un corps absorbant capable d'absorber les condensats recueillis dans la gorge précitée, des moyens étant prévus pour amener ces condensats en contact avec ce corps absorbant, lors de l'ouverture ou de la fermeture du couvercle.

Lorsqu'on enlève le couvercle en l'inclinant, les condensats sont collectés dans la gorge annulaire au point le plus bas de celle-ci.

Le corps absorbant entre en contact avec ces condensats lors de l'ouverture ou de la fermeture du couvercle, ce qui entraîne leur absorption par ce dernier.

La gorge périphérique étant ainsi sensiblement asséchée, par ce corps absorbant, on évite que les condensats s'écoulent brusquement dans le récipient de cuisson lorsque le couvercle est remis en place sur ce récipient. Dans le cas où l'invention est appliquée à une friteuse, on supprime ainsi tout risque de projection d'huile.

Selon une version avantageuse de l'invention, le corps absorbant est disposé à l'intérieur de la gorge périphérique du couvercle à proximité de ladite zone adjacente au point le plus bas du couvercle.

Ainsi, lors de l'ouverture du couvercle, les condensats sont amenés automatiquement en contact avec ce corps absorbant qui peut, de ce fait absorber efficacement ces condensats.

Dans le cas où le couvercle est relié au récipient par une articulation, il convient de disposer le corps absorbant dans la gorge périphérique à proximité de cette articulation.

Ainsi, lors de l'ouverture du couvercle au moyen de cette articulation, les condensats s'écoulent automatiquement vers cette articulation, et de ce fait vers la zone où est situé le corps absorbant.

Un autre avantage de l'invention réside dans le fait qu'entre deux cuissons, le corps absorbant élimine progressivement les condensats qu'il a absorbés, grâce à la chaleur régnant à l'intérieur du récipient de cuisson et à la ventilation naturelle qui s'établit dans ce récipient, ce qui permet à ce corps absorbant d'être à nouveau efficace pour absorber les condensats produits lors de la cuisson suivante.

Le corps absorbant constitue donc ainsi un moyen d'absorption automatique des condensats qui ne nécessite aucune intervention de l'utilisateur, ni aucun entretien.

Selon une réalisation préférée de l'invention le corps absorbant est constitué par une éponge. Une telle éponge, en raison de son faible coût, peut être remplacée facilement lorsqu'elle a perdu son pouvoir absorbant.

D'autres particularités et avantages de l'invention apparaîtront encore dans la description ci-après.

Aux dessins annexés, donnés à titre d'exemples non limitatifs :

la figure 1　est une vue en coupe longitudinale de la partie supérieure d'un ustensile culinaire conforme à l'invention,

la figure 2　est une vue en plan montrant le dessous du couvercle de l'ustensile, selon la figure 1,

la figure 3　est une vue en coupe longitudinale partielle de l'ustensile culinaire selon la figure 1, le couvercle venant d'être ouvert en fin de cuisson,

la figure 4　est une vue analogue à la figure 3, montrant l'état de la gorge du couvercle et de l'éponge quelques instants après celui représenté sur la figure 3,

la figure 5　est une vue en coupe longitudinale partielle montrant une variante de l'invention,

la figure 6　est une vue en coupe longitudinale partielle montrant une autre variante,

la figure 7　est une vue en coupe longitudinale montrant une troisième variante de l'invention.

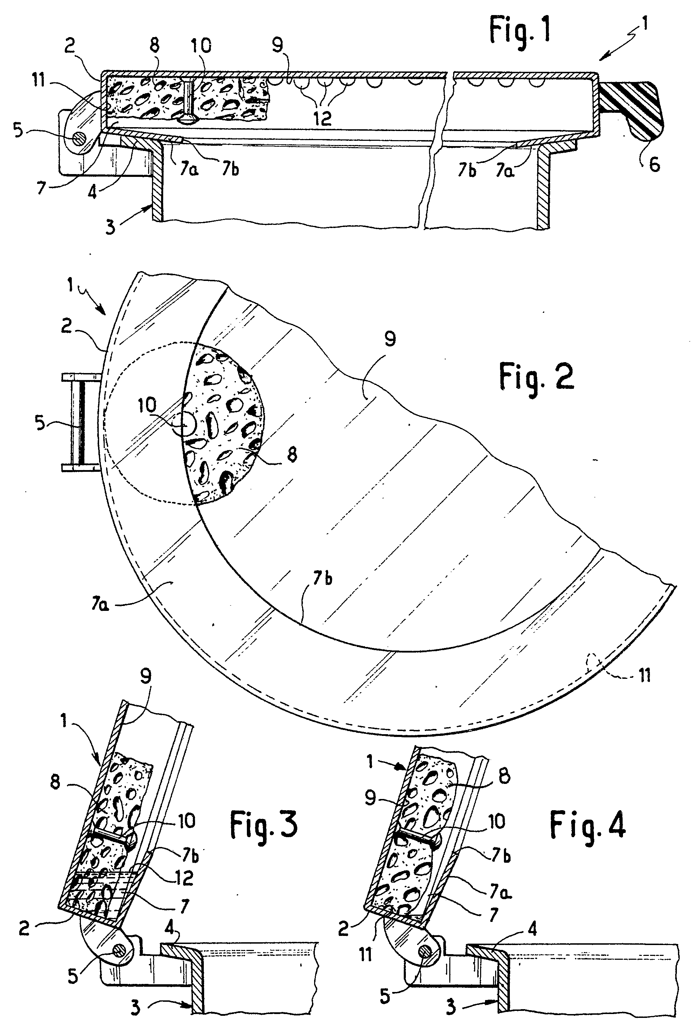

L'ustensile de cuisson représenté sur la figure 1 est une friteuse dont le couvercle métallique 1 comporte un bord périphérique 2 qui est articulé au bord extérieur 4 du récipient 3, suivant un axe d'articulation 5 disposé à l'extérieur du couvercle 1 et du récipient 3. A l'opposé de l'articulation 5, le couvercle 1 porte une poignée 6 permettant d'ouvrir le couvercle 1 en amenant ce dernier à une position sensiblement verticale comme indiqué sur les figures 3 et 4.

Le couvercle 1 comporte sur son bord périphérique 2, une gorge annulaire 7 de section sensiblement en U, ouverte vers l'intérieur de ce couvercle. Cette gorge 7 est réalisée d'une seule pièce avec le fond 9 du couvercle 1.

L'aile inférieure 7a de cette gorge 7 prend appui sur le bord extérieur 4 du récipient 3. Cette aile 7a est légèrement inclinée vers le bas.

Un corps absorbant 8 constitué dans l'exemple représenté par une éponge est disposé à l'intérieur de la gorge périphérique 7, à proximité de l'articulation 5, c'est-à-dire dans une zone adjacente au point le plus bas du couvercle 1, lorsque ce dernier est ouvert, comme indiqué sur les figures 3 et 4.

L'éponge 8 est cylindrique (voir figures 1 et 2) et elle est fixée de façon amovible au fond 9 du couvercle 1 au moyen d'une tige à tête élargie 10. Cette éponge 8 est disposée sensiblement en contact avec le fond 11 de la gorge périphérique 7 et s'étend au-delà du bord libre 7b de cette gorge 7. Ainsi, cette éponge 8 est directement en contact avec l'atmosphère intérieure de l'ustensile de cuisson. De plus, l'épaisseur de l'éponge 8 peut être quelconque dans la mesure où elle est inférieure à la largeur de la gorge 7.

On va maintenant décrire le fonctionnement du dispositif que l'on vient de décrire.

On supposera que l'ustensile de cuisson de la figure 1 est une friteuse.

Lors de la cuisson qui est réalisée avec le couvercle 1 fermé, la vapeur d'eau provenant de la friture des pommes de terre, chargée de produits de dégradation de l'huile de friture, se condense sous forme de gouttelettes 12 sur le fond 9 du couvercle 1 qui est en contact avec l'atmosphère froide extérieure.

Lorsque la friture est terminée, on ouvre le couvercle en le mettant en position fortement inclinée, comme indiqué sur la figure 3. Les gouttelettes de condensats 12 s'écoulent alors sur le fond 9 du couvercle 1 vers le point le plus bas de ce dernier, c'est-à-dire, vers la partie de la gorge 7 qui est adjacente à l'articulation 5. Ces condensats 12 remplissent en partie ou en totalité cette gorge 7. En même temps que les condensats 12 s'écoulent dans la gorge 7, l'éponge 8 les absorbe jusqu'à vider pratiquement complètement cette gorge 7, comme indiqué sur la figure 4.

Ainsi, lorsque l'on referme le couvercle 1, les condensats 12 ne risquent pas de s'écouler dans le bain d'huile contenu dans le récipient 3 et de ce fait de provoquer des projections d'huile susceptibles de salir la cuisine ou les vêtements de l'utilisateur, ou même de causer des brûlures à ce dernier.

De plus, après avoir absorbé la quasi-totalité des condensats 12 collectés dans la gorge annulaire 7, l'éponge 8 n'a pas besoin d'être pressée avant une nouvelle cuisson.

En effet, lors du refroidissement du bain de friture, la chaleur régnant à l'intérieur de la friteuse vaporise progressivement les condensats 12 absorbés par l'éponge 8, de sorte que cette dernière est presque sèche lorsque la friteuse est froide. L'éponge 8 finit de sécher en deux ou trois jours grâce à la ventilation naturelle qui s'établit dans le récipient.

Ce n'est qu'après un grand nombre de fritures, lorsque l'éponge est entièrement saturée en produits huileux, qu'il convient de remplacer l'éponge usagée 8 par une éponge neuve. Cette opération est à la fois peu onéreuse et très aisée, compte-tenu des moyens de fixation rapide constitués par la tige à tête élargie 10. Il est également possible de la laver avec un détergent et de la faire sécher à l'air libre.

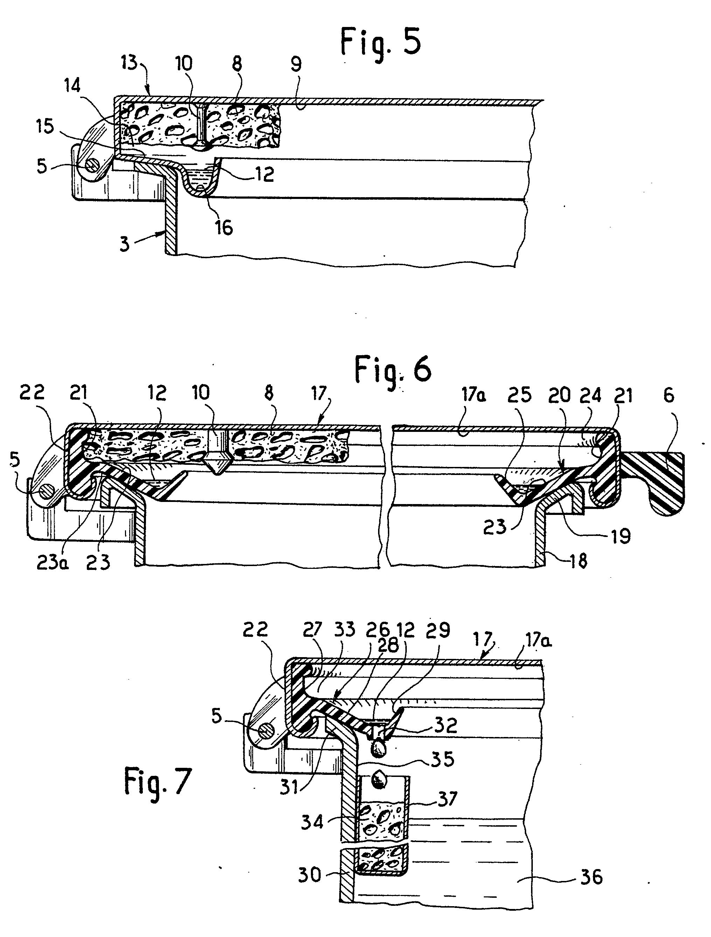

Dans la variante de réalisation de la figure 5, la gorge périphérique 14 du couvercle 13 comporte sur son aile inférieure 15 une rigole 16 ouverte vers le fond de ce couvercle. Cette rigole 16 est située sous l'éponge 8.

L'intérêt de cette rigole est le suivant.

D'une part, elle permet d'accroître la capacité de la gorge 14 par rapport à celle de la gorge 7 de la réalisation selon les figures 1 à 4.

D'autre part, cette rigole 16 permet de recueillir le résidu de condensats 12 qui n'aurait pas pu être absorbé par l'éponge 8, lorsque le couvercle occupe la position de la figure 4.

Par conséquent, grâce à la rigole 16, on supprime totalement les risques d'écoulement de condensats dans le bain d'huile porté à haute température.

Dans la réalisation de la figure 6, le couvercle métallique 17 prend appui de façon étanche sur le bord extérieur 19 du récipient 18, au moyen d'un joint annulaire 20 en matière élastique tel que du caoutchouc de qualité alimentaire. Ce joint 20 comporte un talon 21 qui est encastré dans un rebord périphérique 22 du couvercle 17. Ce joint 20 comporte d'autre part une aile 23 en saillie par rapport au talon 21 et qui s'étend vers l'intérieur du récipient 18. Cette aile 23 présente une surface extérieure tronconique 23a qui prend appui sur le bord 19 du récipient 18.

Cette aile 23 définit avec le talon 21 du joint 20 et avec le fond 17a du couvercle 17, une gorge annulaire 24 analogue aux gorges 7 et 14 des réalisations précédemment décrites, dans laquelle est logée l'éponge 8.

Dans la réalisation représentée sur la figure 6, l'aile 23 du joint 20 comporte près de son extrémité libre, une rigole annulaire 25 dont la fonction est identique à celle de la rigole 12 représentée sur la figure 5.

Dans la réalisation de la figure 7, le joint 26 comporte comme le joint 20 de la figure 6 un talon 27 et une aile 28 reposant sur le bord 31 du récipient 30 et muni d'une rigole annulaire 29. Cependant, le fond de la rigole 29 comporte une ouverture 32 pour l'écoulement des condensats 12 qui sont recueillis dans la gorge périphérique 33, après ouverture du couvercle 17.

De plus, l'éponge 34 au lieu d'être disposée dans la gorge périphérique 33 du couvercle 17, est placée sous l'ouverture 32 de la rigole 29 contre la face interne 35 du récipient 30.

Pour éviter que le bain d'huile 36 contenu dans le récipient 30 imprègne l'éponge 34, celle-ci est placée dans un conteneur étanche 37 qui est ouvert vers l'ouverture 32 de la rigole 29.

Après ouverture du couvercle 17, les condensats d'eau et d'huile sont collectés par la gorge annulaire 33. Lors de la fermeture de ce couvercle 17, ces condensats s'écoulent dans la rigole 29 d'où ils s'écoulent goutte à goutte par l'ouverture 32 et tombent sur l'éponge 34. Cette éponge 34 absorbe ainsi ces condensats, comme dans le cas de la réalisation des figures 1 à 6.

Cette éponge 34 retrouve ensuite son pouvoir absorbant grâce à la chaleur régnant dans le récipient de cuisson qui a pour effet de vaporiser progressivement les condensats absorbés par cette éponge 34.

Bien entendu, l'invention n'est pas limitée aux exemples que l'on vient de décrire, et on peut apporter à ceux-ci de nombreuses modifications sans sortir du cadre de l'invention.

Ainsi, le mode de réalisation de la figure 7 peut être adapté aux réalisations des figures 1 à 5, en plaçant l'éponge 8 contre la paroi latérale du récipient 3 et en ménageant dans la rigole 12 une ouverture pour l'écoulement des condensats.

On peut aussi disposer l'éponge 8 contre la paroi 3 ou 30 du récipient, sans l'usage d'un conteneur étanche lorsque le bain de friture ne peut atteindre cette éponge.

Par ailleurs, dans le cas où le couvercle n'est pas articulé au récipient de cuisson, il convient d'indiquer à l'utilisateur le côté vers lequel ce couvercle doit être incliné lors de son ouverture pour que les condensats soient recueillis dans la zone adéquate de la gorge périphérique où se trouve l'éponge.

Toutefois, l'utilisateur pourrait incliner un tel couvercle vers n'importe quel côté, à condition que l'éponge 8 occupe toute la périphérie de la gorge annulaire 7, 14 ou 24.

Bien entendu, l'invention peut être appliquée à tout ustensile culinaire autre qu'une friteuse, dans lequel on désire éviter que les condensats de vapeur de cuisson s'écoulent brutalement dans le récipient de cuisson, lorsqu'on ouvre ou ferme le couvercle.

## Revendications

1. Ustensile culinaire comprenant un récipient (3, 18, 30) et un couvercle (1, 13, 17) destiné à occuper une position inclinée lors de son ouverture, ce couvercle comportant sur sa périphérie (2, 22) une gorge annulaire (7, 14, 24, 33) ouverte vers l'intérieur de ce couvercle et capable de collecter lors de l'ouverture de ce couvercle les condensats de vapeur formés à l'intérieur de l'ustensile, caractérisé en ce qu'il comporte en son intérieur au moins dans une zone adjacente au point le plus bas du couvercle, lorsque ce dernier est ouvert, un corps absorbant (8, 34) capable d'absorber les condensats (12) recueillis dans la gorge précitée, des moyens étant prévus pour amener ces condensats en contact avec ce corps absorbant, lors de l'ouverture ou de la fermeture du couvercle.

2. Ustensile conforme à la revendication 1, caractérisé en ce que le corps absorbant (8) est disposé à l'intérieur de la gorge périphérique (7, 14) du couvercle (1, 13, 17) à proximité de ladite zone adjacente au point le plus bas du couvercle.

3. Ustensile conforme à la revendication 1, le couvercle (1, 13, 17) étant relié au récipient par une articulation (5), caractérisé en ce que le corps absorbant (8, 34) est disposé à proximité de cette articulation.

4. Ustensile conforme à l'une quelconque des revendications 1 à 3, caractérisé en ce que ledit corps absorbant (8, 34) est une éponge.

5. Ustensile conforme à l'une quelconque des revendications 1 à 4, caractérisé en ce que le corps absorbant (8) est fixé de façon amovible au fond (9, 17a) du couvercle (1, 13, 17).

6. Ustensile conforme à l'une quelconque des revendications 1 à 5, caractérisé en ce que le corps absorbant (8) est disposé sensiblement en contact avec le fond (11) de la gorge périphérique (7).

7. Ustensile conforme à l'une quelconque des revendications 1 à 6, caractérisé en ce que la gorge (14, 24, 33) comporte une rigole circulaire (12, 25, 29) ouverte vers le fond (9, 17a) du couvercle (13, 17).

8. Ustensile conforme à l'une quelconque des revendications 6 à 7, caractérisé en ce que le corps absorbant (8) fait saillie au-delà du bord de la gorge (7, 14, 24) qui est dirigée vers l'intérieur du couvercle (1, 13, 17).

9. Ustensile conforme à l'une quelconque des revendications 1 à 8, caractérisé en ce que la gorge (7, 14) est réalisée d'une seule pièce avec le fond (9) du couvercle (1, 13).

10. Ustensile conforme à l'une quelconque des revendications 1 à 8 et comprenant un joint annulaire (20) en matière plastique destiné à prendre appui sur le bord extérieur (19) du récipient (18), ce joint étant fixé au bord extérieur (22) du couvercle (17), caractérisé en ce que ce joint comporte une aile (23) s'étendant à partir du bord extérieur du couvercle vers l'intérieur de celui-ci.

11. Ustensile conforme à la revendication 10, caractérisé en ce que l'aile (23) comporte une rigole (25) ouverte vers le fond (17a) du couvercle (17).

12. Ustensile conforme à la revendication 10, caractérisé en ce que l'aile (23) comporte une surface inclinée (23a) raccordée à un talon (21) encastré dans un rebord (22) du couvercle (17), cette surface inclinée étant destinée à prendre appui sur le bord extérieur (19) du récipient (18).

13. Ustensile conforme à la revendication 1, caractérisé en ce que la gorge annulaire (33) comporte une rigole (29) ouverte vers le fond (17a) du couvercle (17), le fond de cette rigole comportant une ouverture (32) d'écoulement des condensats, et en ce que le corps absorbant (34) est disposé sous cette ouverture.

14. Ustensile conforme à la revendication 13, caractérisé en ce que le corps absorbant (34) est fixé de façon amovible à la paroi latérale (35) du récipient (30).

15. Ustensile conforme à la revendication 14, caractérisé en ce que le corps absorbant (34) est placé dans un conteneur étanche (37) ouvert vers l'ouverture (32).

**Claims**

1. A culinary utensil comprising a recipient (3, 18, 30) and a lid (1, 13, 17) intended for assuming an inclined position upon being opened, said lid including around its circumference (2, 22) an annular groove (7, 14, 24, 33) opening into said lid and capable, when this lid is opened, of collecting the steam condensates formed inside the utensil, characterized in that it comprises therein at least in a zone adjacent to the lowest point of the lid, an absorbing body (8, 34) capable of absorbing the condensates (12) accumulated in the aforesaid groove, means being provided to bring said condensates into contact with said absorbing body, when the lid is opened or closed.

2. An utensil according to claim 1, characterized in that the absorbing body (8) is positioned inside the circumferential groove (7, 14) of the lid (1, 13, 17) in the vicinity of said zone adjacent to the lowest point of the lid.

3. An utensil according to claim 1, the lid (1, 13, 17) being attached to the recipient by a hinge (5), characterized in that the absorbing body (8, 34) is positioned in the vicinity of this hinge.

4. An utensil according to any one of claims 1 to 3, characterized in that said absorbing body (8, 34) is a sponge.

5. An utensil according to any one of claims 1 to 4, characterized in that the absorbing body (8) is removably secured to the underside (9, 17a) of the lid (1, 3, 17).

6. An utensil according to any one of claims 1 to 5, characterized in that the absorbing body (8), is positioned substantially in contact with the base (11) of the circumferential groove (7).

7. An utensil according to any one of claims 1 to 6, characterized in that the groove (14, 24, 33) comprises a circular gutter (12, 25, 29) opening towards the underside (9, 17a) of the lid (13, 17).

8. An utensil according to either of claims 6 and 7, characterized in that the absorbing body (8) protrudes beyond the edge of the groove (7, 14, 24) that is oriented inwards to the centre of the lid (1, 13, 17).

9. An utensil according to any one of claims 1 to 8, characterized in that the groove (7, 14) is an integral part of the underside (9) of the lid (1, 13).

10. An utensil according to any one of claims 1 to 8 and comprising an annular seal (20) made of plastic coming into press contact with the outer edge (19) of the recipient (18), said seal being fixed to the outer rim (22) of the lid (17), characterized in that said seal comprises a flap (23) running from the outer rim of the lid to the inside thereof.

11. An utensil according to claim 10, characterized in that the flap (23) comprises a gutter (25) open towards the underside (17a) of the lid (17).

12. An utensil according to claim 10, characterized in that the flap (23) comprises an inclined surface (23a) integral with a heel (21) recessed into a rim (22) around the lid (17), said inclined surface intended to rest on the outer edge (19) of the recipient (18).

13. An utensil according to claim 1, characterized in that the annular groove (33) comprises a gutter (29) open towards the underside (17a) of the lid (17), the bottom of said gutter including a spill-way (32) for the condensates, and in that the absorbing body (34) is positioned beneath said spill-way.

14. An utensil according to claim 13, characterized in that the absorbing body (34) is removably secured to the side wall (35) of the recipient (30).

15. An utensil according to claim 14, characterized in that the absorbing body (34) is placed in a sealed container (37) open towards the spill-way (32).

## Ansprüche

1. Kochgerät mit einem Behälter (3, 18, 30) und einem Deckel (1, 13, 17), der bei seiner Öffnung eine geneigte Stellung einnehmen kann und an seinem Umfangsrand (2, 22) eine nach der Innenseite des Deckels offene ringförmige Rinne (7, 14, 24, 33) hat, in der sich beim Öffnen des Deckels die im Innern des Gerätes gebildeten Dampfkondensate sammeln können, dadurch gekennzeichnet, daß sich im Innern des Deckels wenigstens in einer der tiefsten Stelle des geöffneten Deckels benachbarten Zone ein Absorptionskörper (8, 34) befindet, der die in der Rinne angesammelten Kondensate absorbiert, wobei Mittel vorgesehen sind, um diese Kondensate beim Öffnen oder Schließen des Deckels mit diesem Absorptionskörper in Berührung zu bringen.

2. Kochgerät nach Anspruch 1, dadurch gekennzeichnet, daß sich der Absorptionskörper (8) im Innern der Umfangsrinne (7, 14) des Deckels (1, 13, 17) in der Nähe dieser der tiefsten Stelle des Deckels benachbarten Zone befindet.

3. Kochgerät nach Anspruch 1, bei dem der Deckel (1, 13, 17) mit dem Behälter durch ein Scharnier (5) verbunden ist, dadurch gekennzeichnet, daß der Absorptionskörper (8, 34) in der Nähe dieses Scharniers angeordnet ist.

4. Kochgerät nach einem der Ansprüche 1 bis 3, dadurch gekennzeichnet, daß der Absorptionskörper (8, 34) ein Schwamm ist.

5. Kochgerät nach einem der Ansprüche 1 bis 4, dadurch gekennzeichnet, daß der Absorptionskörper (8) abnehmbar am Boden (9, 17a) des Deckels (1, 13, 17) befestigt ist.

6. Kochgerät nach einem der Ansprüche 1 bis 5, dadurch gekennzeichnet, daß sich der Absorptionskörper (8) im wesentlichen mit dem Boden (11) der Umfangsrinne (7) in Berührung befindet.

7. Kochgerät nach einem der Ansprüche 1 bis 6, dadurch gekennzeichnet, daß die Rinne (14, 24, 33) eine ringförmige, gegen den Boden (9, 17a) des Deckels (13, 17) offene Vertiefung (12, 25, 29) aufweist.

8. Kochgerät nach einem der Ansprüche 6 bis 7, dadurch gekennzeichnet, daß der Absorptionskörper (8) über den gegen das Innere des Deckels (1, 13, 17) gerichteten Rand der Rinne (7, 14, 24) vorspringt.

9. Kochgerät nach einem der Ansprüche 1 bis 8, dadurch gekennzeichnet, daß die Rinne (7, 14) mit dem Boden (9) des Deckels (1, 13) einstückig ist.

10. Kochgerät nach einem der Ansprüche 1 bis 8 mit einer Ringdichtung (20) aus plastischem Material, welche auf dem Außenrand (19) des Behälters (18) aufliegt und auf dem Außenrand (22) des Deckels (17) befestigt ist, dadurch gekennzeichnet, daß die Dichtung einen Schenkel (23) hat, der sich von dem Außenrand des Deckels nach dem Innenteil desselben erstreckt.

11. Kochgerät nach Anspruch 10, dadurch gekennzeichnet, daß der Schenkel (23) eine gegen den Boden (17a) des Deckels (17) offene Vertiefung (25) hat.

12. Kochgerät nach Anspruch 10, dadurch gekennzeichnet, daß der Schenkel (23) eine Schrägfläche (23a) aufweist, die mit einem in einen Rand (22) des Deckels (17) eingesetzten Ansatz verbunden ist, wobei die Schrägfläche auf dem Außenrand (19) des Behälters (18) aufliegt.

13. Kochgerät nach Anspruch 1, dadurch gekennzeichnet, daß die ringförmige Rinne (33) eine gegen den Boden (17a) des Deckels (17) offene Vertiefung (29) aufweist, daß der Boden dieser Vertiefung eine Ablauföffnung (32) für die Kondensate hat und daß der Absorptionskörper (34) sich unter dieser Öffnung befindet.

14. Kochgerät nach Anspruch 13, dadurch gekennzeichnet, daß der Absorptionskörper (34) abnehmbar an der Seitenwand (35) des Behälters (30) befestigt ist.

15. Kochgerät nach Anspruch 14, dadurch gekennzeichnet, daß der Absorptionskörper (34) in einem dichten, gegen die Öffnung (32) offenen Gefäß (37) untergebracht ist.

Fig.1

Fig. 2

Fig.3

Fig.4

## Fig. 5

## Fig. 6

## Fig. 7